# EUROPÄISCHE PATENTSCHRIFT

(11) **EP 0 849 128 B1**
(45) Veröffentlichungstag und Bekanntmachung des Hinweises auf die Patenterteilung: **13.03.2002**
(21) Anmeldenummer: 97122160.1
(22) Anmeldetag: 16.12.1997
(51) Int. Cl.: B60R 21/20

(54) **Abdeckung für ein Airbag-Modul**
Airbag module cover
Couvercle pour un module de coussin gonflable

(30) Priorität: 21.12.1996 DE 19653797
(43) Veröffentlichungstag der Anmeldung: 24.06.1998
(73) Patentinhaber: TRW Automotive Safety Systems GmbH & Co. KG, 63743 Aschaffenburg (DE)
(72) Erfinder: Miltenberger, Michael, 63820 Elsenfeld (DE); Dalkilic, Attila, 63824 Sulzbach (DE); Kreuzer, Martin, 63839 Kleinwallstadt (DE); Grothe, Klaus, 63743 Aschaffenburg (DE)
(74) Vertreter: Degwert, Hartmut, Dipl.-Phys.

(56) Entgegenhaltungen:
- WO-A-92/09458
- DE-A- 3 315 535
- DE-A- 19 505 214
- US-A- 4 991 869
- US-A- 5 395 668
- US-A- 5 421 608
- PATENT ABSTRACTS OF JAPAN vol. 096, no. 005, 31.Mai 1996 & JP 08 026061 A (INOAC CORP), 30.Januar 1996,
- PATENT ABSTRACTS OF JAPAN vol. 097, no. 002, 28.Februar 1997 & JP 08 253087 A (TOYOTA MOTOR CORP), 1.Oktober 1996,
- PATENT ABSTRACTS OF JAPAN vol. 096, no. 006, 28.Juni 1996 & JP 08 048202 A (INOAC CORP), 20.Februar 1996,
- PATENT ABSTRACTS OF JAPAN vol. 097, no. 003, 31.März 1997 & JP 08 301053 A (INOAC CORP;TOYOTA MOTOR CORP), 19.November 1996,

## Beschreibung

Die Erfindung betrifft eine Abdeckung für ein im Lenkrad, in der Türverkleidung und/oder in der Armaturentafel eines Fahrzeugs untergebrachtes Airbag-Modul mit einer Basisstruktur aus Kunststoff, die einen Befestigungsbereich und einen - ggf. mit geschäumtem Kunststoff überzogenen - Abdeckbereich umfaßt, sowie mit einem Überzug aus echtem Leder oder Lederimitat, wobei im Abdeckbereich wenigstens ein klappenartig aufreißbarer Bereich vorgesehen ist, der von einer durch Materialschwächung gebildeten Sollbruchlinie und einer Biegelinie umgrenzt ist, wobei längs der Sollbruchlinie außenseitig eine sich über die gesamte Breite der Abdeckung erstreckende, nutartige Vertiefung vorgesehen ist, in die der Überzug unter Ausbildung einer Materialdoppelung hineinragt. Eine Abdeckung dieser Gattung ist aus der WO 92/09458 bekannt.

Bei der Mehrzahl der heute gebräuchlichen Abdeckungen für Airbag-Module besteht die äußere, dem Fahrer zugewandte Oberfläche aus einer im wesentlichen porenfreien, strukturierten Deckschicht des darunter befindlichen, relativ weichen, geschäumten Kunststoffs, mit dem eine harte, formstabile Basisstruktur umschäumt ist. Bei diesen Abdeckungen lassen sich die gegenläufigen Anforderungen nach ausreichender Steifigkeit und sicherem Aufreißverhalten im Benutzungsfall des Airbag in verschiedener Weise aber im Grunde ohne nennenswerte technische Probleme erfüllen. Werden jedoch gesonderte Überzüge aus echtem Leder oder aus Lederimitat verwendet, wird der Kompromiß für die richtige Gestaltung der Sollbruchlinien insofern erheblich erschwert, als zwei unterschiedliche Materialien zu berücksichtigen sind, deren kombinierte Festigkeit einerseits keinen zu hohen Widerstand beim Aufreißen ergeben darf, deren Einzelfestigkeit aber nicht soweit herabgesetzt werden darf, daß bei normalem Gebrauch der Abdekkung über die übliche Lebensdauer eines Kraftfahrzeugs ein unbeabsichtigtes Aufreißen oder Aufbrechen der Sollbruchlinie auftreten kann. Leder als Naturprodukt hat anders, als technische Produkte, eine weit streuende, spezifische Festigkeit, die zudem stark von der Temperatur und Luftfeuchtigkeit abhängig ist und sich durch Alterung erheblich ändern kann. Unter diesen Voraussetzungen ist es äußerst schwierig, Überzüge aus echtem Leder so zu behandeln, daß sie ein definiertes Aufreißverhalten in der Sollbruchlinie und gleichzeitig die geforderte Dauerfestigkeit aufweisen.

Lederimitate aus Kunststoff mit strukturierter Oberfläche sind insoweit zwar weniger empfindlich, weisen aber auch noch erhebliche Toleranzen in der spezifischen Festigkeit auf, so daß sich hier in etwas gemilderter Form die gleichen Probleme ergeben können.

Man hat daher schon Überzüge vorgeschlagen, bei denen in Lederbahnen Ausstanzungen von der Größe des klappenartig aufreißenden Bereiches erzeugt und die Lederabschnitte entlang der Stanzlinie mit einer rückseitig aufgelegten, die Berührungsspalte überdekkenden, dünnen Papierbahn als Sollbruchstelle vernäht sind (DE 40 35 975 C2). Mit anderen Worten, die gewünschte definierte Reißfestigkeit längs der Sollbruchlinien wird nicht im Material Leder, sondern im Material Papier realisiert, in dem sie offenbar besser reproduzierbar ist. Ob diese Lösung letztlich befriedigend sein kann, hängt davon ab, daß ein Papier mit den gewünschten Eigenschaften bereitgestellt und diese Eigenschaften über die Fahrzeuglebensdauer gewährleistet werden können. Davon abgesehen ist dieses Herstellungsverfahren sehr arbeitsaufwendig und muß sehr sorgfältig ausgeführt werden, weil sonst keine zuverlässige Verbindung zwischen Leder und Papier erreicht wird und die beim Nähen zwangsläufig erfolgende Perforierung ein unkalkulierbares Risiko darstellt.

Es besteht somit die Aufgabe, eine Abdeckung der eingangs genannten Art so weiterzubilden, daß die im Material Leder begründeten Schwierigkeiten nicht auftreten können und daß mit vertretbarem Arbeitsaufwand eine Sollbruchlinie geschaffen werden kann, die im normalen Gebrauch über die Fahrzeuglebensdauer allen Beanspruchungen gewachsen ist, im Benutzungsfalle des Airbags aber sicher aufreißt und die Entfaltung des Airbags nicht behindert.

Zur Lösung dieser Aufgabe wird erfindungsgemäß vorgeschlagen, daß der Überzug mit der Materialdopplung in die nutartige Vertiefung eingepreßt ist.

Bei Versuchen mit einer derartig gestalteten Abdeckung hat sich überraschenderweise gezeigt, daß das scharfe Abknicken des Überzugs im Bereich der Materialdopplung in aller Regel ausreicht, um in Verbindung mit der Ausbildung der Materialschwächung im geschäumten Kunststoff einen einwandfreien Aufriß beim Aufblasen des Airbags zu erreichen. Andererseits ist der Überzug in der äußeren, nutartigen Vertiefung sicher eingeklemmt, so daß im normalen Betrieb keine unzuträglichen Belastungen des Überzugs im Sollbruchbereich zu befürchten sind. Damit ist eine sehr zuverlässige Sollbruchlinie für Überzüge aus echtem Leder oder Lederimitaten geschaffen, die zudem denkbar einfach herzustellen ist.

Vorteilhafte Maßnahmen sind in den Unteransprüchen 2 bis 12 beschrieben. Weitere Einzelheiten werden anhand des in den Figuren 1 bis 3 dargestellten Ausführungsbeispielen näher erläutert. Es zeigen:
- Fig. 1: einen Schnitt durch eine Abdeckung gemäß der Erfindung.
- Fig. 2: einen vergrößerten Ausschnitt aus Fig. 1
- Fig. 3: eine Draufsicht auf einen Lederabschnitt für die zentrale Abdeckung eines Airbag-Moduls in einem Lenkrad.

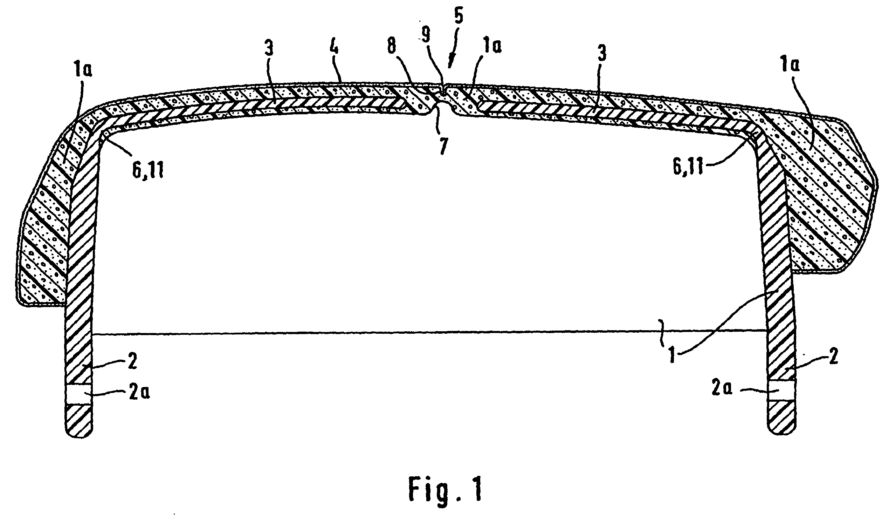

Bei der Ausführungsform gemäß Fig. 1 besteht die Basisstruktur 1 aus einem topfartigen Kunststoffteil, dessen nach unten weisende Wände als Befestigungsbereich 2 mit Durchgangslöchern 2a ausgebildet ist und dessen Abdeckbereich 3 in der Mitte unterbrochen und mit geschäumtem Kunststoff 1a überzogen ist, wobei der geschäumte Kunststoff 1a die Unterbrechung in der Basisstruktur 1 überbrückt und die Sollbruchlinie 5 enthält. Sie wird durch eine äußere nutartige Vertiefung 8 und eine innenseitig gegenüberliegende nutartige Vertiefung 7 definiert, wobei im geschäumten Kunststoff 1a ein Restquerschnitt mit der erforderlichen Festigkeit erhalten geblieben ist. Alternativ kann auch nur eine äußere Vertiefung 8 vorgesehen werden, wenn dadurch ein Restquerschnitt mit der gewünschten Festigkeit geschaffen werden kann.

Diese äußere Vertiefung 8 erstreckt sich erfindungsgemäß über die gesamte Breite der Abdeckung und ist nutartig so ausgebildet und bemessen, daß der Überzug 4 aus Leder oder Lederimitat unter Ausbildung einer Materialdopplung 9 in die Vertiefung 8 eingefaltet und eingepreßt werden kann.

Überraschenderweise hat sich herausgestellt, daß das scharfe Falten des Überzugsmaterials meist schon ausreicht, die erforderliche Materialschwächung längs der Sollbruchlinie zu erzeugen, um bei einer Zündung des Airbags ein einwandfreies Aufreißen der Abdeckung gewährleisten zu können. Mit anderen Worten, mit der erfindungsgemäßen Einbindung des Überzugs 4 können die im Überzugsmaterial unvermeidbaren Festigkeitsunterschiede soweit herabgesetzt werden, daß der Aufreißwiderstand in den gewünschten engen Grenzen reproduzierbar ist.

Andererseits wird durch das Einfalten und Einpressen erreicht, daß das Überzugsmaterial bei normalem Gebrauch längs der Sollbruchlinie praktisch nicht beansprucht wird und daß ein vorzeitiges, ungewolltes Aufreißen des Überzugs 4 sicher vermieden wird.

Der Befestigungsbereich 2 der Basisstruktur 1 ist längs einer Biegelinie 6, die in an sich bekannter Weise durch eine Materialschwächung 11 gebildet wird, mit dem Abdeckbereich 3 verbunden. Der geschäumte Kunststoff 1a ist entsprechend der gewünschten äußeren Form der Abdeckung unterschiedlich dick ausgebildet und von dem Überzug 4 allseitig umgreifend bedeckt.

Wird die Basisstruktur 1 nicht mit geschäumtem Kunststoff 1a überzogen, so wird die äußere nutartige Vertiefung 8 in dem durchgehenden Abdeckbereich 3 der Basisstruktur 1 ausgebildet und der Überzug 4 direkt auf die Basisstruktur 1 aufgebracht.

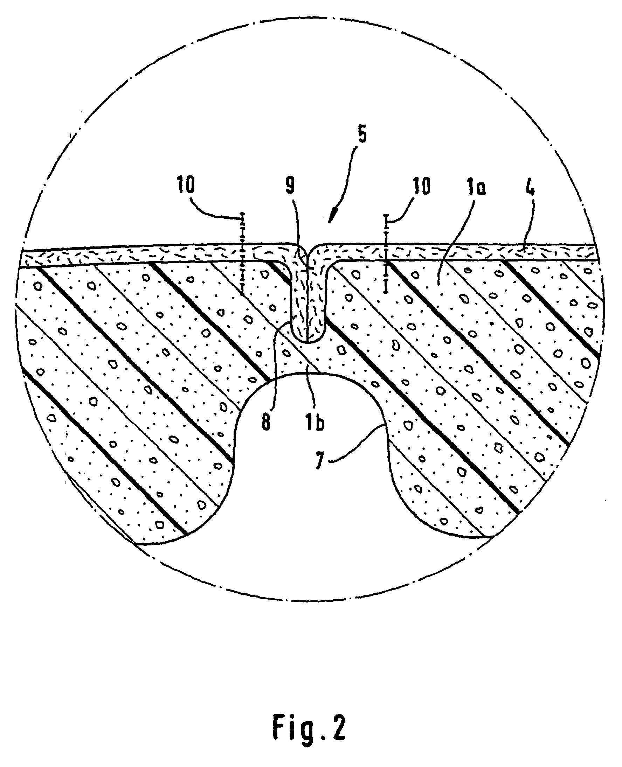

Fig. 2 zeigt als vergrößerter Teilschnitt den Bereich um die Sollbruchlinie 5 gemäß Fig. 1. In die äußere, im geschäumten Kunststoff 1a ausgebildete nutartige Vertiefung 8 ist der Überzug 4 unter Ausbildung einer Materialdopplung 9 eingefaltet und eingepreßt.

Während die äußere Vertiefung in ihrer Abmessung auf die Dicke des Überzugsmaterials und die notwendige Einspanntiefe abgestimmt ist, ist die gegenüberliegende Vertiefung 7 so bemessen, daß im geschäumten Kunststoff 1a nur noch der gewünschte Restquerschnitt 1b verbleibt. Auf diese Weise kann eine allen Anforderungen genügende Sollbruchlinie 5 ausgebildet werden.

Im Nutgrund der äußeren Vertiefung 8 kann das Material des Überzugs 4 durchgetrennt, perforiert oder durch Materialabtrag anderweitig geschwächt sein, wenn mit dem scharfen Falten allein die erforderliche Schwächung nicht erreicht wird. Derartige zusätzliche Maßnahmen liegen in einem Bereich des Überzugs 4, der nach dem Einklemmen mechanisch praktisch nicht belastet wird und nicht sichtbar ist. Alternativ ist es aber auch möglich, rechts und/oder links der Sollbruchlinie 5 eine Ziernaht 10 vorzusehen, deren mögliche Lage in Fig. 2 durch eine vertikale, unterbrochene Linie angedeutet ist. Wenn eine Ziernaht 10 aus optischen Gründen erwünscht ist, kann sie sowohl dazu benutzt werden, den Überzug 4 zusätzlich mit dem Abdeckbereich 3 zu verbinden als auch - durch Perforation - eine definierte zusätzliche Materialschwächung zu erzeugen.

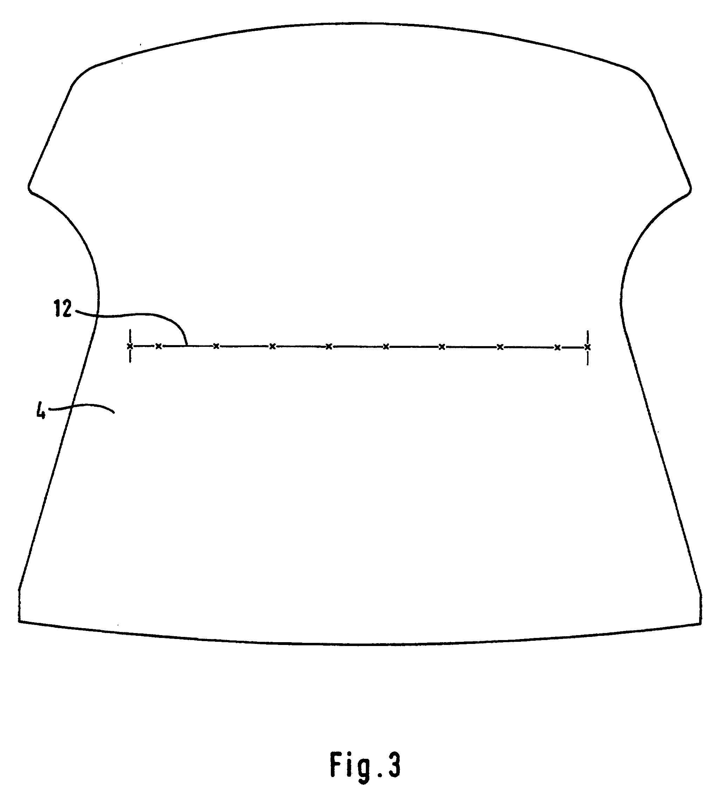

Fig. 3 zeigt einen fertig zugeschnittenen Überzug 4 in der Draufsicht mit einem Einschnitt oder einer Perforation 12 in dem Bereich, der erfindungsgemäß gefaltet und unter Ausbildung einer Materialdopplung 9 in die äußere nutartige Vertiefung 8 gemäß Fig. 1 und 2 eingepreßt wird.

## Patentansprüche

1. Abdeckung für ein im Lenkrad, in der Türverkleidung oder in der Armaturentafel eines Fahrzeugs untergebrachtes Airbag-Modul mit einer Basisstruktur (1) aus Kunststoff, die einen Befestigungsbereich (2) und einen - ggf. mit geschäumten Kunststoff überzogenen - Abdeckbereich (3) umfaßt, sowie mit einem Überzug (4) aus echtem Leder oder Lederimitat, wobei im Abdeckbereich (3) wenigstens ein klappenartig aufreißbarer Bereich vorgesehen ist, der von einer durch Materialschwächung gebildeten Sollbruchlinie (5) und einer Biegelinie (6) umgrenzt ist, wobei längs der Sollbruchlinie (5) außenseitig eine sich über die gesamte Breite der Abdeckung erstreckende, nutartige Vertiefung (8) vorgesehen ist, in die der Überzug (4) unter Ausbildung einer Materialdoppelung (9) hineinragt, **dadurch gekennzeichnet, daß** der Überzug (4) mit der Materialdoppelung (9) in die nutartige Vertiefung (8) eingepreßt ist.

2. Abdeckung nach Anspruch 1, **dadurch gekennzeichnet, daß** die nutartige Vertiefung (8) in der Basisstruktur (1) ausgebildet ist.

3. Abdeckung nach Anspruch 1, **dadurch gekennzeichnet, daß** die Basisstruktur (1) längs der Sollbruchlinie (5) unterbrochen ist, daß die Basisstruktur (1) mit geschäumtem Kunststoff (1a) überzogen ist und daß die nutartige Vertiefung (8) im geschäumten Kunststoff (1a) ausgebildet ist.

4. Abdeckung nach Anspruch 3, **dadurch gekennzeichnet, daß** der nutartigen Vertiefung (8) eine innenseitige nutartige Vertiefung (7) gegenüberliegt.

5. Abdeckung nach einem der Ansprüche 1 4, **dadurch gekennzeichnet, daß** der Überzug (4) im Bereich der Materialdopplung (9) längs der Sollbruchlinie (5) durchgetrennt ist.

6. Abdeckung nach einem der Ansprüche 1 - 4, **dadurch gekennzeichnet, daß** der Überzug (4) im Bereich der Materialdopplung (9) längs der Sollbruchlinie (5) perforiert ist.

7. Abdeckung nach einem der Ansprüche 1 - 4, **dadurch gekennzeichnet, daß** der Überzug (4) im Bereich der Materialdopplung (9) längs der Sollbruchlinie (5) durch Materialabtrag in dem dem Nutgrund zugewandten Bereich geschwächt ist.

8. Abdeckung nach einem der Ansprüche 1 - 4, **dadurch gekennzeichnet, daß** der Überzug (4) durch eine ein- oder beidseitig neben der nutartigen Vertiefung (8) liegende Ziernaht (10) geschwächt ist.

9. Abdeckung nach einem der Ansprüche 1 - 4, **dadurch gekennzeichnet, daß**, **dadurch gekennzeichnet, daß** der Überzug (4) durch die kombinierte Anwendung von wenigstens zwei Maßnahmen gemäß Anspruch 6 bis Anspruch 8 geschwächt ist.

10. Abdeckung nach einem der Ansprüche 1 - 9, **dadurch gekennzeichnet, daß** die außenseitige, nutartige Vertiefung (8) so bemessen ist, daß darin der Überzug (4) unter Ausbildung einer Materialdopplung (9) dauerhaft einklemmbar ist.

11. Abdeckung nach einem der Ansprüche 1 - 11, **dadurch gekennzeichnet, daß** die Biegelinie (6) längs einer Materialschwächung (11) in der Basisstruktur (1) verläuft.

12. Abdeckung nach einem der Ansprüche 1 - 11, **dadurch gekennzeichnet, daß** der Überzug (4) dauerhaft mit der Basisstruktur (1) und/oder dem geschäumten Kunststoff (1a) des Abdeckbereiches (3) beidseitig neben der Sollbruchstelle (5) vernäht ist.

## Claims

1. A covering for an airbag module accommodated in the steering wheel, in the door lining or in the instrument panel of a vehicle, having a base structure (1) of plastic which comprises an attachment area (2) and a covering area (3) optionally coated with foamed plastic, and further having a cover (4) of real or imitation leather, the covering area (3) having provided therein at least one area adapted to be torn open like a flap and delimited by a predetermined breaking line (5) formed by a weakening of the material and by a bending line (6), a groove-like depression (8) which extends over the entire width of the covering being provided on the outer side along the predetermined breaking line (5), the cover (4) protruding into the groove-like depression (8) to form a doubling (9) of the material, **characterized in that** the cover (4) with the doubling (9) of the material is pressed into the groove-like depression (8).

2. The covering according to claim 1, **characterized in that** the groove-like depression (8) is configured in the base structure (1).

3. The covering according to claim 1, **characterized in that** the base structure (1) is interrupted along the predetermined breaking line (5), that the base structure (1) is coated with foamed plastic (la), and that the groove-like depression (8) is formed in the foamed plastic (1a).

4. The covering according to claim 3, **characterized in that** a groove-like depression (7) on the inner side is located opposite the groove-like depression (8).

5. The covering according to any of claims 1 to 4, **characterized in that** the cover (4) is cut through along the predetermined breaking line (5) in the area of the doubling (9) of the material.

6. The covering according to any of claims 1 to 4, **characterized in that** the cover (4) is perforated along the predetermined breaking line (5) in the area of the doubling (9) of the material.

7. The covering according to any of claims I to 4, **characterized in that** the cover (4) is weakened along the predetermined breaking line (5) in the area of the doubling (9) of the material by a removal of material in the area facing the base of the groove.

8. The covering according to any of claims 1 to 4, **characterized in that** the cover (4) is weakened by an ornamental seam (10) on one or both sides adjacent to the groove-like depression (8).

9. The covering according to any of claims 1 to 4, **characterized in that** the cover (4) is weakened by a combined application of at least two of the measures according to claim 6 to claim 8.

10. The covering according to any of claims 1 to 9, **characterized in that** the outer groove-like depression (8) is dimensioned such that the cover (4) can be permanently clamped therein, forming a doubling (9) of the material.

11. The covering according to any of claims 1 to 10, **characterized in that** the bending line (6) extends along a weakening (11) of the material in the base structure (1).

12. The covering according to any of claims 1 to 11, **characterized in that** the cover (4) is permanently sewn to the base structure (1) and/or the foamed plastic (la) of the covering area (3) on both sides adjacent to the predetermined breaking point (5).

## Revendications

1. Couvercle pour un module de coussin à gaz logé dans le volant, dans le revêtement de portière ou dans le tableau de bord d'un véhicule, comportant une structure de base (1) en matière plastique, qui comprend une zone de fixation (2) et une zone de recouvrement (3) - le cas échéant revêtue de matière plastique expansée -, et comportant un revêtement (4) en cuir véritable ou en imitation de cuir, au moins une région déchirable à la manière d'un volet étant prévue dans la zone de recouvrement (3) et délimitée par une ligne de rupture de consigne (5) formée par un affaiblissement de matériau et par une ligne de pliage (6), et le long de la ligne de rupture de consigne (5) étant prévu un enfoncement (8) en forme de rainure qui s'étend à l'extérieur sur toute la largeur du couvercle et dans lequel s'étend le revêtement (4) en formant un doublage de matière (9), **caractérisé en ce que** le revêtement (4) est pressé avec le doublage de matière (9) dans l'enfoncement (8) en forme de rainure.

2. Couvercle selon la revendication 1, **caractérisé en ce que** l'enfoncement (8) en forme de rainure est réalisé dans la structure de base (1).

3. Couvercle selon la revendication 1, **caractérisé en ce que** la structure de base (1) est interrompue le long de la ligne de rupture de consigne (5), **en ce que** la structure de base (1) est revêtue de matière plastique expansée (la) et **en ce que** l'enfoncement (8) en forme de rainure est réalisé dans la matière plastique expansée (1a).

4. Couvercle selon la revendication 3, **caractérisé en ce que** l'enfoncement (8) en forme de rainure est situé à l'opposé d'un enfoncement (7) en forme de rainure situé à l'intérieur.

5. Couvercle selon l'une quelconque des revendications 1 à 4, **caractérisé en ce que** le revêtement (4) est sectionné dans la zone de doublage de matière (9) le long de la ligne de rupture de consigne (5).

6. Couvercle selon l'une quelconque des revendications 1 à 4, **caractérisé en ce que** le revêtement (4) est perforé dans la zone de doublage de matière (9) le long de la ligne de rupture de consigne (5).

7. Couvercle selon l'une quelconque des revendications 1 à 4, **caractérisé en ce que** le revêtement (4) est affaibli dans la zone de la doublure de matière (9) le long de la ligne de rupture de consigne (5) par enlèvement de matière dans la zone tournée vers le fond de la rainure.

8. Couvercle selon l'une quelconque des revendications 1 à 4, **caractérisé en ce que** le revêtement (4) est affaibli par une couture ornementale (10) située sur un ou sur les deux côtés adjacents à l'enfoncement (8) en forme de rainure.

9. Couvercle selon l'une quelconque des revendications 1 à 4, **caractérisé en ce que** le revêtement (4) est affaibli par l'application combinée d'au moins deux mesures selon les revendications 6 à 8.

10. Couvercle selon l'une quelconque des revendications 1 à 9, **caractérisé en ce que** l'enfoncement (8) en forme de rainure situé sur l'extérieur a des dimensions telles que le revêtement (4) peut être serré de manière permanente dans celui-ci en formant un doublage de matière (9).

11. Couvercle selon l'une quelconque des revendications 1 à 10, **caractérisé en ce que** la ligne de pliage (6) s'étend le long d'un affaiblissement de matière (11) dans la structure de base (1).

12. Couvercle selon l'une quelconque des revendications 1 à 11, **caractérisé en ce que** le revêtement (4) est cousu de manière permanente avec la structure de base (1) et/ou avec la matière plastique expansée (1a) de la zone de recouvrement (3), des deux côtés adjacents au point de rupture de consigne (5).
